(19) Europäisches Patentamt
European Patent Office
Office européen des brevets

(11) Veröffentlichungsnummer: **0 037 506**
**A1**

# (12) EUROPÄISCHE PATENTANMELDUNG

(21) Anmeldenummer: 81102164.1

(22) Anmeldetag: 23.03.81

(51) Int. Cl.³: C 09 B 26/04
C 09 B 44/00

(30) Priorität: 05.04.80 DE 3013272

(43) Veröffentlichungstag der Anmeldung:
14.10.81 Patentblatt 81/41

(84) Benannte Vertragsstaaten:
CH DE FR GB IT LI

(71) Anmelder: BAYER AG
Zentralbereich Patente, Marken und Lizenzen
D-5090 Leverkusen 1, Bayerwerk(DE)

(72) Erfinder: Gleinig, Harald, Dr.
Eichholzer Weg 100
D-5068 Odenthal(DE)

(72) Erfinder: Berger-Lohr, Bernd, Dr.
Heymannstrasse 63
D-5090 Leverkusen 1(DE)

(72) Erfinder: Breig, Kurt, Dr.
Leopold-Gmelin-Strasse 80
D-5000 Koeln 80(DE)

## (54) Verfahren zur Herstellung kationischer Farbstoffe.

(57) Die Herstellung von kationischen Farbstoffen der allgemeinen Formel

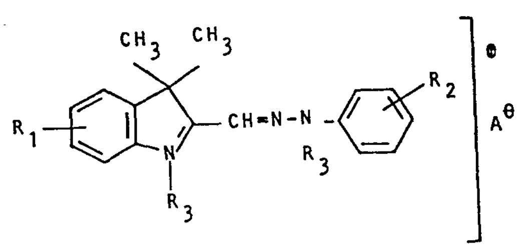

1

worin

$R_1$ für Wasserstoff, $C_1$-$C_4$-Alkyl, $C_1$-bis $C_4$-Alkoxy, Nitro oder Halogen,
$R_2$ für Wasserstoff, $C_1$-bis $C_4$-Alkyl, $C_1$-bis $C_4$-Alkoxy, Halogen oder Phenylazo,
$R_3$ für $C_1$-bis $C_3$-Alkyl und
$A^{\ominus}$ für ein Anion stehen,

erfolgt durch Umsetzung von Azobasen der allgemeinen Formel

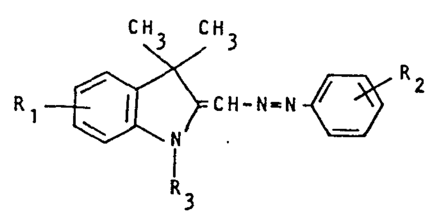

II

worin

$R_1$, $R_2$ und $R_3$ die obengenannte Bedeutung haben,

mit Dialkylsulfaten der allgemeinen Formel

$$(R_3\text{-}O\text{-})_2SO_2 \qquad (III)$$

./...

EP 0 037 506 A1

worin

$R_3$ die obengenannte Bedeutung hat,
in Abwesenheit von organischen Lösungsmitteln in Gegenwart von Wasser, wobei das Gewichtsverhältnis von Azobase : Wasser 100 : 15 – 100 und das Molverhältnis Azobase : Dialkylsulfat 1 : 1,5 - 2,5 betragen, und gegebenenfalls durch Austausch des Alkylsulfat-Anions gegen ein anderes Anion.

BAYER AKTIENGESELLSCHAFT 5090 Leverkusen, Bayerwerk

Zentralbereich
Patente, Marken und Lizenzen Mi-Th-c

## Verfahren zur Herstellung kationischer Farbstoffe

Die vorliegende Erfindung betrifft ein Verfahren zur Herstellung von kationischen Farbstoffen der allgemeinen Formel

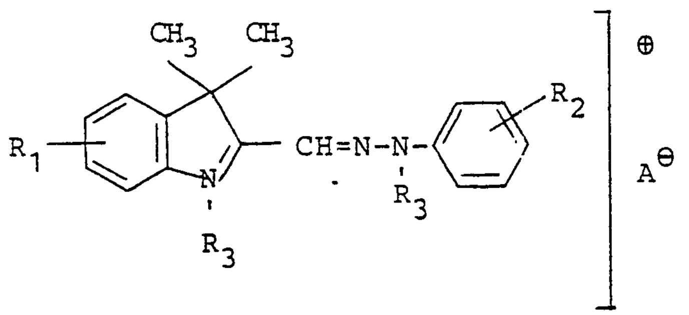

I

worin

$R_1$ für Wasserstoff, $C_1$-$C_4$-Alkyl, $C_1$- bis $C_4$-Alkoxy, Nitro oder Halogen,

$R_2$ für Wasserstoff, $C_1$- bis $C_4$-Alkyl, $C_1$- bis $C_4$-Alkoxy, Halogen oder Phenylazo,

$R_3$ für $C_1$- bis $C_3$-Alkyl und

$A^{\ominus}$ für ein Anion stehen,

durch Umsetzung von Azobasen der allgemeinen Formel

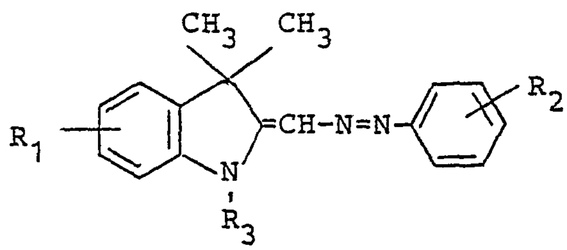

II

worin

$R_1$, $R_2$ und $R_3$ die obengenannte Bedeutung haben,

mit Dialkylsulfaten der allgemeinen Formel

$$(R_3\text{-O-})_2SO_2 \qquad \text{(III)}$$

worin

$R_3$ die obengenannte Bedeutung hat,

in Abwesenheit von organischen Lösungsmitteln in Gegenwart von Wasser, wobei das Gewichtsverhältnis von Azobase : Wasser 100 : 15 - 100 und das Molverhältnis Azobase : Dialkylsulfat 1 : 1,5 - 2,5 betragen, und gegebenenfalls durch Austausch des Alkylsulfat-Anions gegen ein anderes Anion.

Das erfindungsgemäße Verfahren ermöglicht es, die schwer vollständig quaternierbaren, schwachen Farbbasen II in rascher Reaktion quantitativ in die Farbstoffe I zu überführen.

Das Verfahren wird in der Regel in einem pH-Bereich von 6-10 unter Verwendung von säurebindenden Mitteln wie Soda, Magnesiumoxid oder Natronlauge bei Temperaturen zwischen 50 und 100°C durchgeführt und erfordert nur sehr kurze Reaktionszeiten von ca. 30 Minuten bis ca. 1.5 Stunden.

Ein wesentliches Kriterium des erfindungsgemäßen Verfahrens ist das Verhältnis von Azobase : Wasser : Dialkylsulfat, das in den angegebenen Bereichen zu einer Schmelze führt.

Das bevorzugte Gewichtsverhältnis von Azobase : Wasser ist 100 : 20 - 70, und das bevorzugte Molverhältnis von Azobase : Dialkylsulfat ist 1 : 1,5 - 2.

Eine besonders geeignete Ausführungsform des Verfahrens besteht darin, das Quaternierungsmittel vorzulegen - gegebenenfalls zusammen mit einem Teil eines säurebindenden Mittels - und die Azobase trocken oder als feuchte Paste mit dem Rest des säurebindenden Mittels anschließend einzutragen, wobei das Quaternierungsmittel der Farbbase gleichzeitig als Lösungsmittel dient. Die entsprechende Menge Wasser wird bevorzugt zuletzt zugegeben.

In den Formeln wird unter Halogen vorzugsweise Chlor und Brom verstanden.

Bevorzugt stehen:

$R_1$ für Wasserstoff, Methyl oder Methoxy,

$R_2$ für Wasserstoff, Methyl, Ethyl, Methoxy, Ethoxy oder Phenylazo,

$R_3$ für Methyl oder Ethyl und

$A^{\ominus}$ für Methosulfat, Ethosulfat, Chlorid, Sulfat, Phosphat oder Acetat oder Gemische dieser Anionen.

Besonders geeignet ist das erfindungsgemäße Verfahren zur Herstellung der Farbstoffe der Formel I, worin

$R_1$ für Wasserstoff,

$R_2$ für Wasserstoff, Methoxy, Methyl oder Phenylazo,

$R_3$ für Methyl und

$A^{\ominus}$ für die obengenannten Anionen stehen,

und insbesondere zur Herstellung des Farbstoffs der Formel

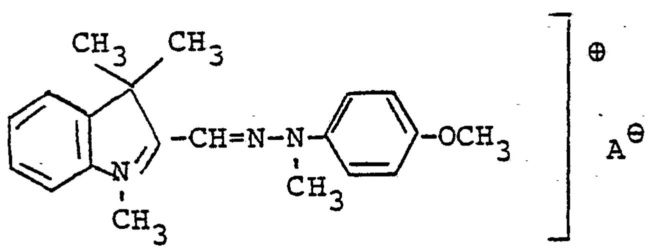

IV

Gegenüber bekannten wäßrigen Quaternierungsverfahren, die mit einem größeren Gewichtsverhältnis von Wasser : Azobase arbeiten, z.B. dem aus DE-OS 25 09 622 bekannten Verfahren, liegt der Vorteil des erfindungsgemäßen Verfahrens darin, daß erheblich weniger Quaternierungsmittel bei quantitativem Umsatz benötigt wird.

Gegenüber wasserfreien Quaternierungsverfahren, z.B. dem aus DE-OS 28 25 296 bekannten Verfahren, benötigt man beim erfindungsgemäßen Verfahren erheblich kürzere Reaktionszeiten und erzielt außerdem vollständigere Umsetzungen.

Das bevorzugte Verfahren kann im einzelnen so durchgeführt werden, daß man z.B. Dialkylsulfat und einen Teil des säurebindenden Mittels vorlegt und eine Farbbase der allgemeinen Formel II, trocken oder gegebenenfalls als feuchte Paste, zusammen mit dem Rest des säurebindenden Mittels bei 50-65°C so einträgt, daß der pH-Wert nicht unter 7, vorzugsweise 7-9, abfällt. Die entsprechende Menge Wasser wird im Anschluß hieran zugegeben.

Anschließend steigert man die Temperatur zur quantitativen Umsetzung auf 65-100°C, wobei eine nahezu homogene Schmelze entsteht.

Das Reaktionsgemisch wird dann mit Säure, z.B. Salzsäure, Schwefelsäure, Essigsäure oder Phosphorsäure auf pH 1-7, vorzugsweise 3-6, gestellt, und beispielsweise in einem Vakuumschaufeltrockner oder Sprühtrockner zur Trockne eingedampft.

Das Verfahren liefert wertvolle kationische Hydrazon-Farbstoffe mit den handelsüblichen Echtheiten und klaren brillanten Farbtönen. Es hat den Vorteil, daß kein Abwasser anfällt.

Beispiel

In 252 g Dimethylsulfat und 10 g Soda werden bei 50-60°C 307 g Farbbase der Formel

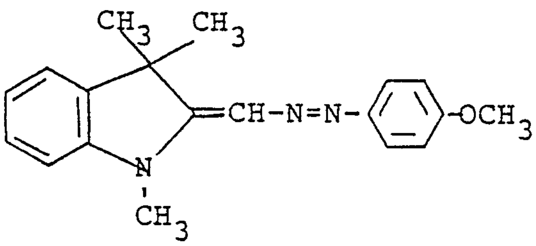

und simultan dazu 128 g Soda eingetragen. Nach Zugabe von 100 g Wasser steigert man die Temperatur auf ca. 80°C und rührt ca. 30 Minuten nach bis dünnschichtchromatographisch kein Ausgang mehr nachzuweisen ist. Gegebenenfalls gibt man weitere geringe Mengen Soda und Dimethylsulfat zu. Die Reaktionsschmelze wird dann mit Salzsäure auf pH 4-6 gebracht und im Vakuumschaufeltrockner zur Trockne eingedampft. Es resultieren ca. 620 g Farbstoff der Formel IV mit dem entsprechenden Gehalt an Reaktionssalzen. Das Reaktionsprodukt kann ohne weitere Reinigung zum Färben eingesetzt werden. Der Farbstoff färbt Polyacrylnitril in goldgelben Farbtönen.

Analog zu diesem Beispiel lassen sich auch die Farbbasen der allgemeinen Formel II, in der $R_1$ für Wasserstoff, $R_2$ für Wasserstoff, p-$CH_3$ oder p-N=N-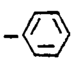 und $R_3$ für Methyl stehen, in die entsprechenden kationischen Farbstoffe überführen.

## Patentansprüche

1. Verfahren zur Herstellung von kationischen Farbstoffen der allgemeinen Formel

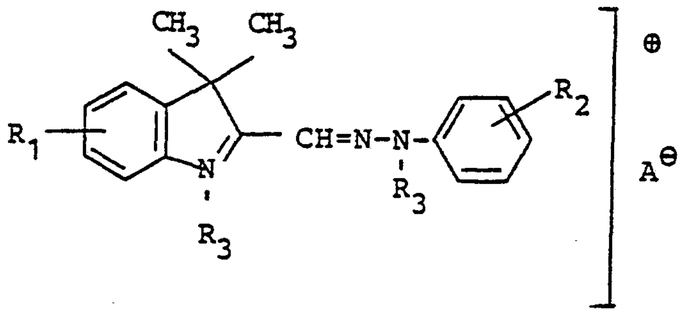

worin

$R_1$ für Wasserstoff, $C_1$- bis $C_4$-Alkyl, $C_1$- bis $C_4$-Alkoxy, Nitro oder Halogen,

$R_2$ für Wasserstoff, $C_1$- bis $C_4$-Alkyl, $C_1$- bis $C_4$-Alkoxy, Halogen oder Phenylazo,

$R_3$ für $C_1$- bis $C_3$-Alkyl und

$A^{\ominus}$ für ein Anion stehen,

durch Umsetzung von Azobasen der allgemeinen Formel

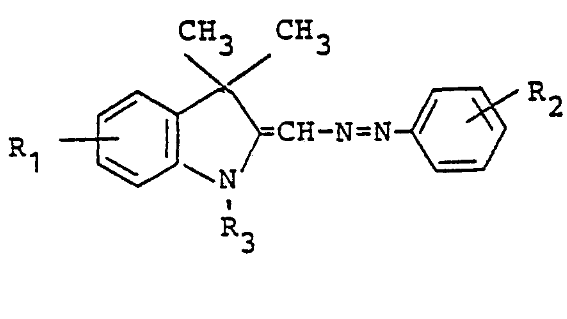

mit Dialkylsulfaten der allgemeinen Formel

$$(R_3\text{-O-})_2SO_2$$

in Abwesenheit von organischen Lösungsmitteln und in Anwesenheit von Wasser und gegebenenfalls durch Austausch des Alkylsulfat-Anions gegen ein anderes Anion, dadurch gekennzeichnet, daß das Gewichtsverhältnis von Azobase : Wasser 100 : 15-100 und das Molverhältnis Azobase : Dialkylsulfat 1 : 1,5 - 2,5 betragen.

2. Verfahren gemäß Anspruch 1, dadurch gekennzeichnet, daß das Gewichtsverhältnis von Azobase : Wasser 100 : 20-70 und das Molverhältnis von Azobase : Dialkylsulfat 1 : 1,5 - 2 betragen.

3. Verfahren gemäß Anspruch 1, dadurch gekennzeichnet, daß man das Dialkylsulfat und ein säurebindendes Mittel vorlegt und die Azobase und weiteres säurebindendes Mittel und anschließend Wasser zugibt.

4. Verfahren gemäß Anspruch 3, dadurch gekennzeichnet, daß man die Azobase als feuchte Paste zugibt.

5. Verfahren gemäß Anspruch 1, dadurch gekennzeichnet, daß man die Umsetzung bei pH-Werten von 6-10 durchführt.

6. Verfahren gemäß Anspruch 1, dadurch gekennzeichnet, daß man die Umsetzung bei 50-100°C während 30 Minuten bis 1.5 Stunden durchführt.

7. Verfahren zur Herstellung von kationischen Farbstoffen der Formel des Anspruchs 1, worin

$R_1$ für Wasserstoff, Methyl oder Methoxy,
$R_2$ für Wasserstoff, Methyl, Ethyl, Methoxy, Ethoxy oder Phenylazo,
$R_3$ für Methyl oder Ethyl und

$A^\ominus$ für Methosulfat, Ethosulfat, Chlorid, Sulfat, Phosphat oder Acetat oder Gemische dieser Anionen stehen.

0037506

Europäisches Patentamt

# EUROPÄISCHER RECHERCHENBERICHT

Nummer der Anmeldung
EP 81 10 2164

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CHEMICAL ABSTRACTS, Band 83, Nr. 10, 8. September 1975, Seite 122, Nr. 81227t<br>Columbus, Ohio, U.S.A.<br>& JP - A - 75 17431 (NIPPON KAYAKU CO., LTD.) 24-02-1975<br>* Zusammenfassung *<br>-- | 1 |
| | GB - A - 1 544 290 (YORKSHIRE CHEMICALS)<br>* Seite 1, Zeile 28 - Seite 2, Zeile 11; Beispiel 1 *<br>-- | 1 |
| A | FR - A - 2 263 284 (DU PONT DE NEMOURS) | |
| D | & DE - A - 2 509 622 | |
| DA | DE - A - 2 825 296 (BASF)<br>---- | |

KLASSIFIKATION DER ANMELDUNG (Int Cl )

C 09 B 26/04
41/00

RECHERCHIERTE SACHGEBIETE (Int. Cl.[3])

C 09 B 26/04
44/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 13-07-1981 | DAUKSCH |

EPA form 1503.1 06.78